# EUROPEAN PATENT APPLICATION

(11) **EP 4 287 629 A1**
(43) Date of publication of application: **06.12.2023**
(21) Application number: 22176634.8
(22) Date of filing: 01.06.2022
(51) Int. Cl.: H04N 21/414, H04N 21/422, H04N 21/45, H04N 21/441, H04N 21/442, H04N 21/854

(54) **MODIFY MEDIA CONTENT BASED ON SENSOR SIGNAL**

(71) Applicant: Bayerische Motoren Werke Aktiengesellschaft, 80809 München (DE)
(72) Inventor: Zaki, Tarek, 81829 München (DE)

(57) **Abstract**

Given an in-vehicle media player, it is an objective of the present invention to improve an experience of transportation. The objective is solved by a computer-implemented method (400) for modifying digital media content (130), the method comprising steps: a) receive (410) an input sensor signal from a car sensor (120) of a vehicle (101); b) generate (420) modified media content by modifying the media content (130) based on the sensor signal; and c) play (430) the modified media content on an in-vehicle media player (110).

## Description

### Technical field

The invention relates to a method, device, system, and storage medium for modifying digital media content based on input signal from car sensor.

### Background

Modern in-car entertainment systems incorporate various audio and video content. In a vehicle the playing time of content is typically limited to a certain travel duration to destination. This limitation may in certain circumstances prevent the user to enjoy the full content until its end.

### Summary

The deficiency is solved by a computer-implemented method for modifying digital media content, the method comprising steps: a) receive an input sensor signal from a car sensor of a vehicle; b) generate modified media content by modifying the media content based on the sensor signal; and c) play the modified media content on an in-vehicle media player.

Generate modified media content may be by modifying the media content (130) or filter the media content (130), based on the sensor signal and total duration of the media content or the remaining time to finish the content based on where the user last stopped watching/consuming the entertainment content.

As of today, the active navigation system on the headunit is not connected to the in-car entertainment cars. They're typically standalone devices. Furthermore, there is no algorithm in place that actively captures the remaining time until destination in real-time and compare this value to
(a) the total duration of the content (e.g. podcast, movie, etc.) available on the entertainment system and
(b) the remaining duration of the content from where the user stopped watching last.

Moreover, based on this comparison, there is no algorithm that
(a) filters, or
(b) modifies the content accordingly.

Advantages include (A) helping in reducing driver distraction because often family members, particularly kids, or guests would long converse with the driver to select the suitable content. (B) the feature also helps the driver him/herself to reduce the interaction time with the system to find the desired content, and accordingly, reduce the risk of car accidents and increases overall road safety. (C) The feature also helps the in-car Speech Assistant know what is likely the desired answer to the command of the car occupant. And accordingly, this reduces driver distraction and increases road safety. (D) Entertainment systems typically downloads/buffers some of the streaming content to avoid interruptions when there are internet connection disturbances on the road. Giving better hints to the system on what content makes more sense to download also saves power consumption - which is very high in case of downloading 4k (UHD) or higher resolution content. This is becoming more and more important in the present day for electric cars to enable longer driving distances.

The deficiency is further solved by the system and storage medium of claims 5 and 6, respectively. Some preferable embodiments are defined in the dependent claims.

In one embodiment, the sensor signal includes real-time estimation information on a remaining trip duration preferably received from a navigation device; and modifying the media content in step b) comprises: prepare a list of media content by filtering out media content, (a) the total duration of which, and (b) the remaining duration of which, is longer than the remaining trip duration; prepare the list of media content to a passenger of the vehicle (101); and in response to a signal indicating a selection of media content from the list of media content, generate the modified media content.

"Remaining" here means the remaining time from which the user stopped last time consumed the entertainment content.

In one embodiment, the sensor signal includes real-time estimation information on a remaining trip duration preferably received from a navigation device; and modifying the media content in step b) comprises: adjusting a playing length of the media content by removing and/or adding parts or by speeding up or slowing down playing speed, or by selecting a media content version out of a plurality of versions, so that the playing length is less than or equal to the remaining trip duration.

In one embodiment, the sensor signal includes video and/or sound data from in-cabin cameras and/or microphones, the method further comprises deriving an estimate of passengers' age, gender, and/or identity, based on the input signal; and modifying the media content of step b) comprises suggesting media content based on the estimate of passengers' age, gender, and/or identity.

In one embodiment, the user may detect from navigation the traffic jam and accordingly push to the user convenient entertainment content (incl. advertisements) that would ease the situation and keep the driver as well as the passengers active and attentive on the road.

### Detailed description of the figures

In the following, embodiments of the invention are described with respect to the figures, wherein
Fig. 1 depicts a system for modifying digital media content according to an embodiment of the invention.
Fig. 2 depicts a method for modifying digital media content according to the invention.

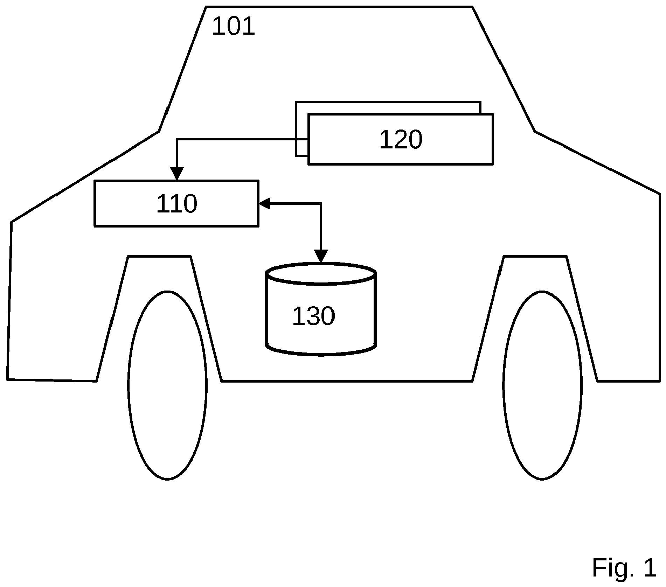

Fig. 1 depicts a system for modifying digital media content according to an embodiment of the invention. The system comprises a vehicle 101, at least one media player 110, a car sensor 120, and media content 130. The media player 110 is configured to execute the method of any of the preceding claims. Each of the media player may also have an own storage device (i.e. memory).

Media content 130 may also be streaming content that can be also on the cloud (outside of the car). Thus, the system is likely to include another device (i.e. a modem) in the car which is responsible for internet connection.

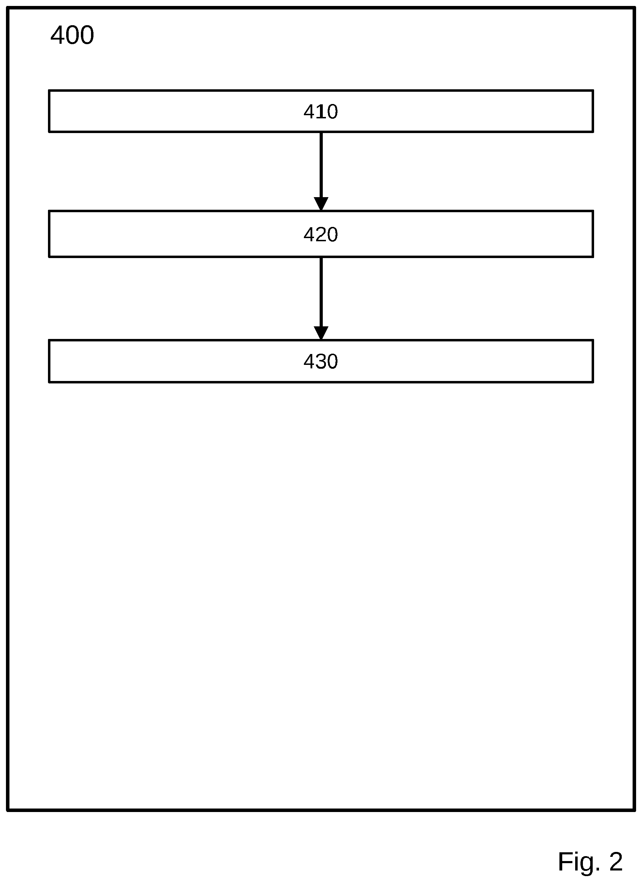

Fig. 2 depicts a computer-implemented method 400 for modifying digital media content 130, the method comprising steps: a) receive 410 an input sensor signal from a car sensor 120 of a vehicle 101; b) generate 420 modified media content by modifying the media content 130 based on the sensor signal; and c) play 430 the modified media content on an in-vehicle media player 110.

The sensor signal may include real-time estimation information on a remaining trip duration preferably received from a navigation device. The modifying media content in step b) may then comprise preparing a list of media content by filtering out media content, the duration (total or remaining) of which is longer than the remaining trip duration. The step may further include presenting the list of media content to a passenger of the vehicle (101). The presenting the list may include displaying and/or pre-download titles, or make suggestions available for the in-car Speech Assistant, of non-filtered out media content on a display of the vehicle or reading out the titles of the list in a loudspeaker of the vehicle. In response to a signal indicating a selection of media content from the list of media content, the step may include generating the modified media content based on the selection. A passenger may select a media content by using a touch screen displaying the list of titles, or by giving a voice command indicating the selected media content.

In one embodiment, modifying the media content in step b) comprises: adjusting a playing length of the media content by removing and/or adding parts or by speeding up or slowing down playing speed, or by selecting a media content version out of a plurality of versions, so that the playing length is less than or equal to the remaining trip duration. As an example, a certain media content title may come in several versions, such as at least five versions, which may be of different lengths, the modifying media content may comprise a selection of a version that is adapted to the remaining trip duration, such as the longest media content version that is less than or equal in length to the remaining trip duration.

For example, the content provider can label parts (e.g. chapter of an e-book, or a scene in a movie, etc.) of the content with priority label. The higher the priority, the less likely this will be removed depending on the available remaining time to destination. Adding/removing will then be in the order or priority.

In another embodiment is the filtering (or at least giving priority to certain) contents based on total and/or remaining durations.

In one embodiment, the sensor signal includes video and/or sound data from in-cabin cameras and/or microphones. Input from a microphone may include a voice recording of a passenger, such as a driver. The method further comprise deriving an estimate of passengers' age, gender, and/or identity, based on the input signal, and modifying the media content of step b) may comprise suggesting media content based on the estimate of passengers' age, gender, and/or identity. As an alternative to estimating passenger information based on input signals from a camera and/or a microphone of the vehicle, the estimation of passenger information may be acquired from a user account to which the passenger is signed into. Information on the passenger may also be based on sensors indicating seat belt settings, passenger weight, or passenger fingerprints. The car may save information retrieved from such sensors under a label indicating a passenger of a plurality of passenger using the car. In case there are several passengers the selection may be to filter media content that is suitable to all passengers, or at least one of the passengers.

### Reference numerals:

- 101: Vehicle
- 110: Media player
- 120: At least one car sensor
- 130: Media content
- 400: Method for modifying digital media content based on car sensor input
- 410: Receive signal from a car sensor
- 420: Generate modified media content
- 430: Play modified media content

## Claims

1. A computer-implemented method (400) for modifying digital media content (130), the method comprising steps:
a) receive (410) an input sensor signal from a car sensor (120) of a vehicle (101);
b) generate (420) modified media content by modifying the media content (130) based on the sensor signal; and
c) play (430) the modified media content on an in-vehicle media player (110).

2. The method of claim 1,
wherein the sensor signal includes real-time estimation information on a remaining trip duration preferably received from a navigation device; and
wherein modifying the media content in step b) comprises:
- prepare a list of media content by filtering out media content, the total or remaining duration of which is longer than the remaining trip duration, or by prioritizing up a suggestion list displayed on an entertainment system,
or prioritizing up suggestions given by a Speech Assistant;
- present the list of media content to a passenger of the vehicle (101); and
- in response to a signal indicating a selection of media content from the list of media content, generate the modified media content.

3. The method of claim 1 or claim 2, preferably claim 1,
wherein the sensor signal includes real-time estimation information on a remaining trip duration preferably received from a navigation device; and
wherein modifying the media content in step b) comprises:
- adjusting a playing length of the media content by removing and/or adding parts or by speeding up or slowing down playing speed, or by selecting a media content version out of a plurality of versions, so that the playing length is less than or equal to the remaining trip duration.

4. The method of any of the preceding claims, preferably of claim 1,
wherein the sensor signal includes video and/or sound data from in-cabin cameras and/or microphones;
wherein the method further comprises deriving an estimate of passengers' age, gender, and/or identity, based on the input signal; and
wherein modifying the media content of step b) comprises suggesting media content based on the estimate of passengers' age, gender, and/or identity.

5. A system for modifying digital media content (130) based on an input sensor signal from at least one car sensor (120) of a vehicle (101), the system comprising:
the vehicle (101),
a media player (110),
the car sensor (120),
the media content (130),
wherein the media player (110) is configured to execute the method of any of the preceding claims.

6. A computer-readable storage medium having stored therein a computer program comprising instructions to cause the media player of claim 5 to execute the method of any of the claims 1 to 4.
